# EUROPÄISCHE PATENTSCHRIFT

(11) **EP 2 782 756 B1**
(45) Veröffentlichungstag und Bekanntmachung des Hinweises auf die Patenterteilung: **09.03.2016**
(21) Anmeldenummer: 12791099.0
(22) Anmeldetag: 16.11.2012
(51) Int. Cl.: B32B 37/10, B32B 38/18

(54) **KASCHIERVORRICHTUNG FÜR EINE KONTINUIERLICHE VAKUUMKASCHIERUNG**
LAMINATION DEVICE FOR CONTINUOUS VACUUM LAMINATION
DISPOSITIF DE STRATIFICATION POUR UNE STRATIFICATION SOUS VIDE EN CONTINU

(30) Priorität: 22.11.2011 DE 102011119192
(43) Veröffentlichungstag der Anmeldung: 01.10.2014
(73) Patentinhaber: Maschinenfabrik Herbert Meyer GmbH & Co. KG, 92444 Rötz (DE)
(72) Erfinder: MEYER, Thomas, 92444 Roetz (DE)
(74) Vertreter: Kramer Barske Schmidtchen Patentanwälte PartG mbB
(86) Internationale Anmeldenummer: PCT/EP2012/004782
(87) Internationale Veröffentlichungsnummer: WO 2013/075809

(56) Entgegenhaltungen:
- EP-A2- 0 031 724
- EP-A2- 1 561 387
- DE-A1- 2 035 123

## Beschreibung

### Gebiet der Erfindung

Die vorliegende Erfindung betrifft eine Kaschiervorrichtung, die zum Verkleben von flächigen Materialien verwendet wird. Die flächigen Materialien werden in einer derartigen Kaschiervorrichtung unter Temperatureinwirkung und Druck miteinander verbunden.

### Stand der Technik

Bekannte Kaschiervorrichtungen dienen dazu, bahnförmige Materialien oder Zuschnitte aus solchen bahnförmigen, flächigen Materialien mit anderen bahnförmigen Materialien bzw. Zuschnitten solcher Materialien oder aber mit Materialien mit höherer Eigensteifigkeit zu verkleben.

Dazu werden die flächigen Materialien durch eine Transporteinrichtung in die Kaschiervorrichtung eingebracht, dort verarbeitet, das heißt mit dem Werkstück verbunden, und meist im Durchlaufverfahren wieder aus der Kaschiervorrichtung abtransportiert.

Zum Transport der flächigen Materialien, das heißt des Kaschierguts, durch die Kaschiervorrichtungen insbesondere durch die dort vorgesehene Heizzone sowie die Zone, in der Druck aufgebracht wird, werden zum Beispiel Bandförderer oder Gurtförderer eingesetzt, auf denen das Kaschiergut aufliegt.

Aus der EP 1 561 387 B1 ist eine Kaschiervorrichtung bekannt, die mindestens eine Heizzone sowie mindestens eine Transporteinrichtung zum Transport eines Werkstücks sowie eines Kaschierguts durch die Heizzone aufweist. Die Transporteinrichtung enthält eine zumindest bereichsweise luftdurchlässige Auflage für das Kaschiergut. Ferner enthält die Transporteinrichtung eine Einrichtung zum Erzeugen von Unterdruck, wobei die Einrichtung zum Erzeugen von Unterdruck derart mit der Auflage zusammenwirkt, dass das Kaschiergut während des Transports durch die Heizzone zumindest auf einem Teilstreckenabschnitt des Transportwegs an die Auflage angesaugt wird.

Zusätzlich ist aus der DE 27 38 749 C2 eine Vorrichtung zum Auflegen eines Abziehbogens mit mehreren darauf befestigten Substraten bekannt. Des Weiteren offenbart die DE 10 2009 002 023 A1 eine Laminationsvorrichtung.

### Darstellung der Erfindung

Es ist eine Aufgabe der Erfindung, eine Kaschiervorrichtung vorzusehen, deren Funktionsweise verbessert ist.

Diese Aufgabe wird mit einer Kaschiervorrichtung mit den Merkmalen des Anspruchs 1 gelöst. Bevorzugte Ausführungsformen sind in den abhängigen Ansprüchen angegeben.

Der Erfindung liegt der Gedanke zugrunde, das Kaschiergut mittels Unterdruck an die Transporteinrichtung, insbesondere die Auflage der Transporteinrichtung, auf der das Kaschiergut aufliegt, anzusaugen, damit das Kaschiergut faltenfrei und glatt auf der Auflage liegt während es mit dem Werkstück verbunden wird. Dazu weist die Auflage wenigstens einen luftdurchlässigen Bereich auf, der sich in der Richtung, in der das Werkstück von der Auflage transportiert wird, erstreckt und mit der Aussparung in dem Temperaturänderungselement in Verbindung steht. Durch den luftdurchlässigen Bereich kann während des Kaschierens Luft, die sich zwischen dem Kaschiergut und dem Werkstück befindet, über die Schlitze in dem Temperaturänderungselement abgesaugt werden. Dadurch wird in der Kaschiervorrichtung ein hoher Flächendruck zwischen Werkstück und Kaschiergut erzeugt, welcher die Entstehung von Lufteinschlüssen zwischen Werkstück und Kaschiergut verhindert und zudem eine zuverlässige Verarbeitung von Kaschiergut mit unterschiedlichen Höhen ermöglicht.

### Kurze Beschreibung der Figuren

Nachfolgend wird die Erfindung beispielhaft anhand der beigefügten Figuren beschrieben, in denen
- Fig. 1: eine schematische Seitenansicht einer Kaschiervorrichtung einer ersten Ausführungsform ist,
- Fig. 2: eine schematische Draufsicht auf die Kaschiervorrichtung aus Fig. 1 ist,
- Fig. 3: eine schematische Ansicht der Kaschiervorrichtung aus Fig. 1 in einem Schnitt quer zu der Transportrichtung ist,
- Fig. 4: eine vergrößerte Ansicht des Ausschnitts IV aus Fig. 3 ist,
- Fig. 5: eine schematische Seitenansicht einer Kaschiervorrichtung gemäß einer zweiten Ausführungsform ist, und
- Fig. 6: eine schematische Seitenansicht einer Kaschiervorrichtung gemäß einer dritten Ausführungsform ist.

### Wege zur Ausführung der Erfindung

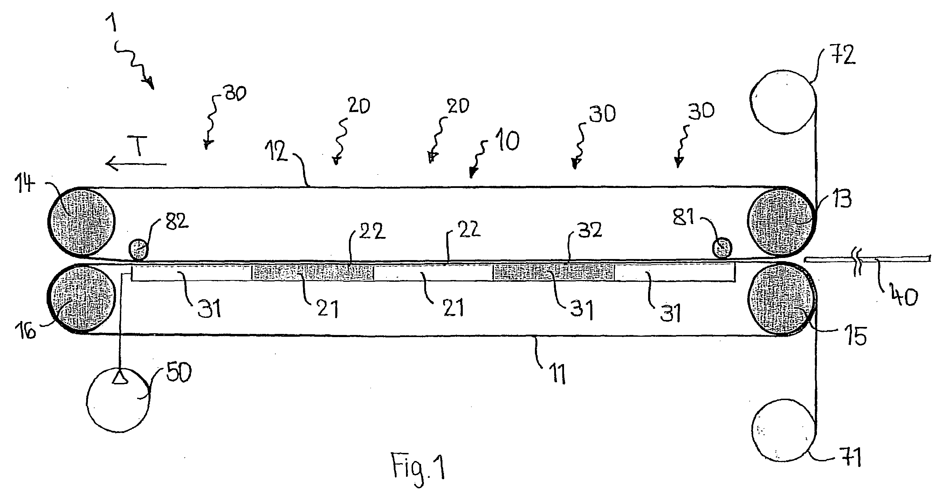

Fig. 1 zeigt eine Kaschiervorrichtung 1 gemäß einer ersten Ausführungsform. Die Kaschiervorrichtung 1 weist eine Transporteinrichtung 10 auf. Die Transporteinrichtung 10 weist eine untere Auflage 11 und eine obere Auflage 12 auf. Alternativ kann die Transporteinrichtung auch lediglich eine einzige Auflage 11, 12 aufweisen. Beiden Auflagen 11, 12 sind als Endlosbänder ausgebildet. Alternativ kann jede der Auflagen 11, 12 auch als Endlosgurt ausgebildet sein Die untere Auflage 11 wird über zwei untere Umlenkrollen 15, 16 geführt. Die obere Auflage 12 wird über zwei obere Umlenkrollen 13, 14 geführt. Alternativ können die Auflagen 11, 12 auch über mehr als jeweils zwei Umlenkrollen geführt werden. Eine der beiden Umlenkrollen 13, 14 bzw. 15, 16 kann dabei als Antriebswalze ausgebildet sein, während die andere der beiden Umlenkrollen als Spannwalze ausgebildet sein kann. Alternativ kann wenigstens eine der beiden Auflagen 11, 12 nicht endlos, sondern abrollbar und wieder aufwickelbar, dass heißt umwickelbar, ausgebildet sein. Eine Transportrichtung, in der sich die einander gegenüberliegenden Bereiche der unteren Auflage 11 und der oberen Auflage 12 während des Betriebs der Kaschiervorrichtung 1 bewegen, verläuft in Fig. 1 von rechts nach links und wird als die Transportrichtung T bezeichnet. Die jeweiligen einer der Auflagen 11, 12 zuzuordnenden Umlenkrollen 13, 14 bzw. 15, 16 liegen einander in der Transportrichtung T gegenüber, wobei die Umlenkrollen 13, 15 an einem ersten Ende der Kaschiervorrichtung 1 und die Umlenkrollen 14, 16 an einem zweiten Ende der Kaschiervorrichtung 1 angeordnet sind.

Die Kaschiervorrichtung 1 weist ferner mehrere Zonen mit unterschiedlichen Temperaturen auf, die sogenannten Temperaturänderungszonen. Genauer weist die Kaschiervorrichtung 1 zwei Heizzonen 20 und drei Kühlzonen 30 auf. Jede Temperaturänderungszone weist ein Temperaturänderungselement auf. Alternativ kann jede Temperaturänderungszone auch mehrere Temperaturänderungselemente aufweisen. Die Temperaturänderungselemente sind plattenförmig, das heißt mit einer flachen Oberseite parallel zu einer flachen Unterseite, ausgebildet. Alternativ können die Temperaturänderungselemente jedoch auch derart ausgebildet sein, dass sie keine parallele Ober- und Unterseite, sondern beispielsweise divergierende oder konvergierende Ober- und Unterseiten aufweisen. Jede Heizzone 20 weist ein Heizelement 21 auf. Jede Kühlzone 30 weist ein Kühlelement 31 auf. Bei der in Fig. 1 gezeigten Kaschiervorrichtung 1 sind die ersten beiden Temperaturänderungszonen Kühlzonen 30, die dritte und vierte Temperaturänderungszone sind Heizzonen 20 und die fünfte Temperaturänderungszone ist wieder eine Kühlzone 30, alle Temperaturänderungszonen gezählt von dem ersten Ende der Kaschiervorrichtung 1 in Transportrichtung T. Alternativ können die Heizzonen 20 und die Kühlzonen 30 auch abwechselnd angeordnet sein, mit einer Kühlzone 30 am rechten Rand von Fig. 1, das heißt an dem ersten Ende der Kaschiervorrichtung 1 in Bezug auf die Transportrichtung T, beginnend, oder können jede andere geeignete Anordnung zueinander aufweisen. Jedes Heizelement 21 bzw. jedes Kühlelement 31 weist in wenigstem einem sich in Transportrichtung T erstreckenden Randbereich eine Vielzahl von Schlitzen 22, 32 auf. Alternativ kann jedes Heizelement 21 bzw. Kühlelement 31 in dem sich in Transportrichtung T erstreckenden Rand auch lediglich einen Schlitz aufweisen. Das Heizelement 21 kann als Heizplatte und das Kühlelement 31 kann als Kühlplatte ausgebildet sein. Die Übergänge zwischen den einzelnen Temperaturänderungselementen 21, 31 sind abgedichtet, beispielsweise mittels eines Teflonstabs.

Ferner weist die Kaschiervorrichtung 1 eine Unterdruckeinrichtung 50 auf. Die Unterdruckeinrichtung 50 steht mit den Schlitzen 22, 32 der Heiz- bzw. Kühlelemente 21, 31 in Verbindung (nicht gezeigt in Fig. 1). Die Unterdruckeinrichtung 50 kann eine Vakuumpumpe oder jede andere Einrichtung zum Erzeugen von Unterdruck sein. Bei der in Fig. 1 gezeigten Kaschiervorrichtung 1 ist die Unterdruckeinrichtung 50 an dem linken Rand der Kaschiervorrichtung 1, das heißt dem zweiten Ende der Kaschiervorrichtung 1 in Bezug auf die Transportrichtung T, angeordnet. Alternativ kann die Unterdruckeinrichtung 50 aber auch dem ersten Ende der Kaschiervorrichtung 1 in Bezug auf die Transportrichtung T oder an einer Position zwischen dem ersten Ende und dem zweiten Ende der Kaschiervorrichtung 1 angeordnet sein. Darüber hinaus kann die Kaschiervorrichtung auch mehrere Unterdruckeinrichtungen 50 aufweisen. Beispielsweise kann jedes Temperaturänderungselement 21, 31 mit einer eigenen Unterdruckeinrichtung 50 versehen sein. So können im Vergleich zu einer einzigen Unterdruckeinrichtung 50 die einzelnen Temperaturänderungszonen 20, 30 mit unterschiedlichen Drücken beaufschlagt werden. Alternativ können unterschiedliche Drücke in den Temperaturänderungszonen 20, 30 auch über Bypassleitungen mit einer geeigneten Regelungstechnik realisiert werden.

Fig. 1 zeigt ferner ein Werkstück 40. Das Werkstück 40 ist außerhalb vor dem ersten Ende der Kaschiervorrichtung 1 und parallel zu der Transportrichtung T angeordnet. Alternativ können auch mehrere Werkstücke, dass heißt ein mehrlagiges Werkstück, gleichzeitig in der Kaschiervorrichtung 1 kaschiert werden.

Fig. 1 zeigt ferner ein erstes Kaschiergut 71 und ein zweites Kaschiergut 72. Das erste Kaschiergut 71 ist zu einer Rolle aufgewickelt, wobei ein loses Ende des ersten Kaschierguts 71 über die Umlenkrolle 15 der unteren Auflage 11 geführt ist. Das zweite Kaschiergut 72 ist ebenfalls zu einer Rolle aufgewickelt, wobei ein loses Ende des zweiten Kaschierguts 72 über die Umlenkrolle 13 der oberen Auflage 12 geführt ist. Die Anzahl der Kaschiergüter kann von der Anzahl der Auflagen der Kaschiervorrichtung 1 abhängen, das heißt bei einer Auflage kann ein Kaschiergut verwendet werden, bei zwei Auflagen können zwei Kaschiergüter verwendet werden, usw. Alternativ können auch mehrere Lagen von Kaschiergütern, die über je eine der Umlenkrollen 13, 15 geführt werden, das erste und/oder das zweite Kaschiergut bilden.

Alternativ zu der Kombination des wenigstens eines Werkstücks 40 und des wenigstens einen Kaschierguts 71, 72 ist es auch möglich, die Kaschiervorrichtung 1 lediglich mit wenigstens einem Werkstück oder mit wenigstens einem Kaschiergut zu bestücken. Beispielsweise kann die Kaschiervorrichtung nur mit einem Werkstück 40 bestückt werden, das aus Kunststoff hergestellt ist und dessen Oberfläche während des Kaschiervorgangs aufgrund der Wärmeeinwirkung der Heizelemente 21 schmilzt, so dass keine Dimensionsänderungen des Werkstücks 40 nach dem Kaschiervorgang mehr auftreten können (Thermofixieren).

Schließlich zeigt Fig. 1 noch, dass die Kaschiervorrichtung 1, genauer die obere Auflage 12, eine erste Andruckrolle 81 an einem ersten Ende der Kaschiervorrichtung 1 in Transportrichtung T und eine zweite Andruckrolle 82 an einem zweiten Ende der Kaschiervorrichtung 1 in Transportrichtung T aufweist. Alternativ oder zusätzlich kann auch die untere Auflage die Andruckrollen 81, 82 oder weitere Andruckrollen aufweisen. Die Andruckrollen 81, 82 weisen einen weichen Belag auf (nicht gezeigt).

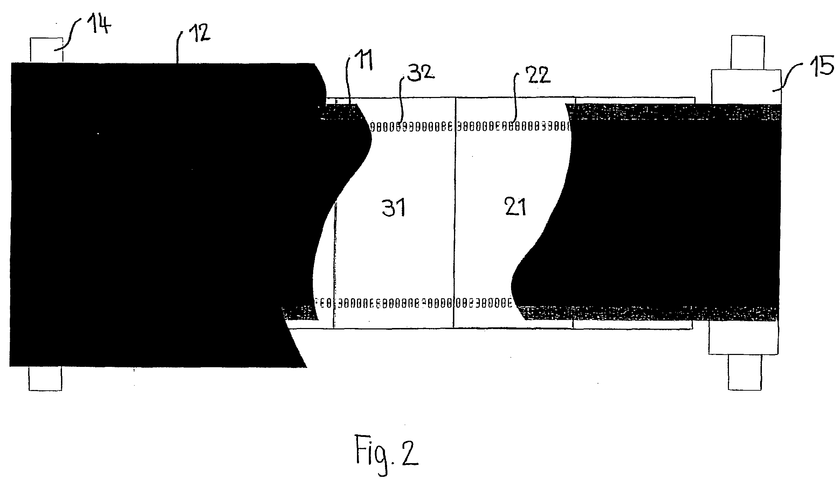

Fig. 2 zeigt, dass sich jedes Heizelement 21 als auch jedes Kühlelement 31 nahezu über die gesamte Breite der Kaschiervorrichtung 1 erstreckt, die sich quer zu der Transportrichtung T und parallel zu Bereichen der Auflagen 11, 12 zwischen den Umlenkrollen 13, 14, 15, 16 erstreckt. Alternativ kann jedes Heizelement 21 und jedes Kühlelement 31 sich auch lediglich über einen Teil der Breite der Kaschiervorrichtung 1, zum Beispiel entlang eines Rands der Kaschiervorrichtung 1, erstrecken oder jedes Heizelement 21 und jedes Kühlelement 31 kann mehrere Einzelelemente, die in der Breitenrichtung der Kaschiervorrichtung 1 nebeneinander angeordnet sind, aufweisen. Wie in Fig. 2 gezeigt, erstreckt sich jeder der Schlitze 22, 32 quer zur Transportrichtung T auf der Oberseite des jeweiligen Heizelements 21 bzw. Kühlelements 31. Alternativ können sich die Schlitze 22, 32 jeweils auch in Transportrichtung T erstrecken oder ein Teil der Schlitze 22, 32 kann sich in Transportrichtung T erstrecken, während sich der andere Teil der Schlitze 22, 32 quer zur Transportrichtung T erstreckt.

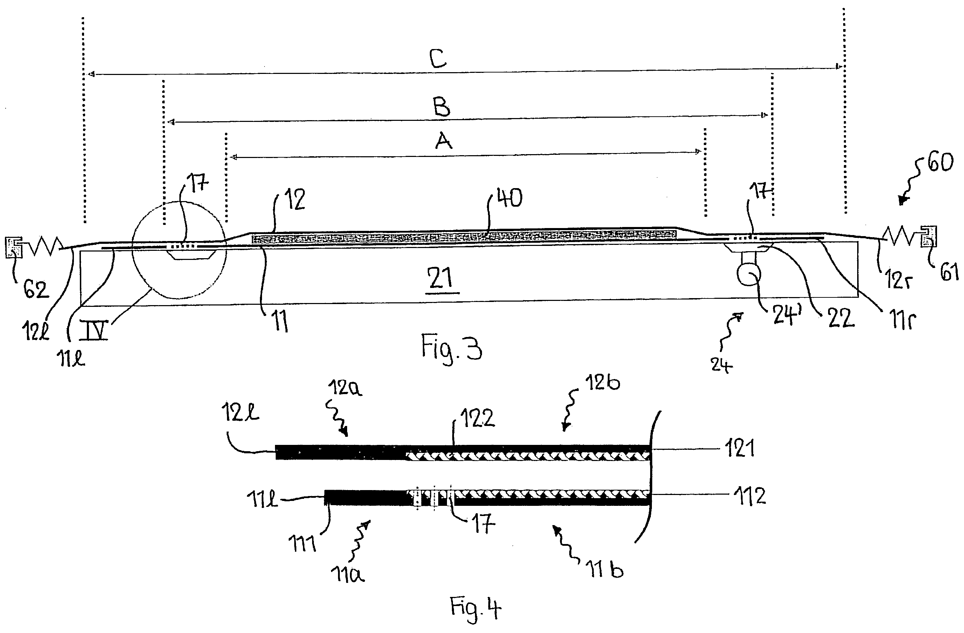

Fig. 3 zeigt eine Ansicht einer der Heizelemente 21, der ersten Auflage 11 und der zweiten Auflage 12 mit dem Werkstück 40 dazwischen in einem Schnitt quer zu der Transportrichtung T. Die obere Auflage 12 ist in einer Führungseinrichtung 60 geführt. Genauer sind der rechte Rand 12r der oberen Auflage 12 in Transportrichtung T betrachtet durch ein erstes Führungselement 61 und der linke Rand 121 der oberen Auflage 12 in Transportrichtung T betrachtet durch ein zweites Führungselement 62 geführt. Alternativ kann auch nur einer der beiden Ränder 12r, 121 durch ein jeweiliges Führungselement 61, 62 geführt sein. Ferner kann alternativ oder zusätzlich auch die untere Auflage 11 an ihrem rechten Rand 11r und/oder an ihrem linken Rand 111 in Transportrichtung T durch entsprechende Führungselemente (nicht gezeigt) geführt sein.

Wie Fig. 3 ferner zeigt, weist die untere Auflage 11 Löcher 17 auf. Die exakte Lage der Löcher 17 wird weiter unten mit Bezug auf Fig. 4 beschrieben. Im montierten Zustand der Kaschiervorrichtung 1 sind die Löcher 17 unmittelbar oberhalb der Schlitze 22 des Heizelements 21 oder der Schlitze 32 des Kühlelements 31 (nicht gezeigt) angeordnet. Die Schlitze 21 sind mit einer Unterdruckleitung 24' (in Fig. 3 nur einmal exemplarisch gezeigt) verbunden. Die Unterdruckleitung 24' erstreckt sich in Transportrichtung T durch das Heizelement 21. Auch alle übrigen Heizelemente 21 und alle Kühlelemente 31 weisen eine solche Unterdruckleitung 24' auf (nicht gezeigt), so dass im montierten Zustand der Kaschiervorrichtung 1 alle Unterdruckleitungen 24' eine gemeinsame kontinuierliche Unterdruckleitung 24 bilden. Die gemeinsame Unterdruckleitung 24 steht mit der Unterdruckeinrichtung 50 in Verbindung.

Fig. 3 zeigt ferner, dass die Kaschiervorrichtung 1 in ihrer Breitenrichtung drei Bereiche A, B und C aufweist, die sich jeweils symmetrisch zu einer Mitte der Kaschiervorrichtung 1 in der Breitenrichtung erstrecken. Dabei sind in der Breitenrichtung der Kaschiervorrichtung 1 die Bereiche A und B innerhalb des Bereichs C und der Bereich A innerhalb des Bereichs B angeordnet. Bereich A wird als die Kaschierzone bezeichnet. In Bereich A herrscht während des Betriebs der Kaschiervorrichtung 1 ein Unterdruck von etwa 0,5 bar. Der Bereich B wird als die Vakuumzone bezeichnet. In der Vakuumzone erfolgt die Absaugung von Luft, die sich zwischen dem Werkstück 40 und dem ersten Kaschiergut 71 bzw. dem zweiten Kaschiergut 72 befindet. Der Bereich C wird als die Abdichtzone bezeichnet. Der Bereich C dichtet das in der Vakuumzone A erzeugte Vakuum gegenüber der Umgebung ab.

Fig. 4 zeigt, dass sowohl die untere Auflage 11 als auch die obere Auflage 12 einen äußeren Teilbereich 11a, 12a und einen inneren Teilbereich 12a, 12b aufweisen. Der innere Teilbereich 11a, 12b ist jeweils zweilagig aus einem Glasgewebe 112, 122 und einer geeigneten Beschichtung 111, 121, wie beispielsweise einer PTFE (Polytetrafluorethen) -Beschichtung, aufgebaut, so dass jede Auflage im in die Kaschiervorrichtung 1 eingebauten Zustand eine glatte Außenseite und eine angeraute Innenseite aufweist. Genauer weist die untere Auflage 11 ein grobes Glasgewebe und die obere Auflage 12 ein feines Glasgewebe auf. Alternativ kann aber auch die untere Auflage 11 ein feines Glasgewebe und die obere Auflage 12 ein grobes Glasgewebe aufweisen oder beide Auflagen 11, 12 können ein grobes oder ein feines Glasgewebe aufweisen. Die angeraute Innenseite kann alternativ auch mittels angerauter Tücher oder Bänder zusätzlich wie ein Kaschiergut oder ein Werkstück zugeführt und ggf. Wieder rückgeführt und aufgewickelt werden. In Bezug auf die untere Auflage 11 umfasst der innere Teilbereich 11b den Bereich der Auflage 11, in den die Löcher 17 in die untere Auflage 11 eingebracht sind und der sich zwischen den Löchern erstreckt. In Bezug auf die obere Auflage 12 umfasst der innere Teilbereich 12b den Bereich der Auflage 12, der dem inneren Teilbereich 11b der unteren Auflage 11 im montierten Zustand der Kaschiervorrichtung 1 entspricht. Der äußere Teilbereich 11a der unteren Auflage 11, das heißt der Bereich der unteren Auflage 11, der sich von den Löchern 17 bis zum Rand 11r, 111 der unteren Auflage 11 erstreckt, weist kein Glasgewebe auf, sondern besteht gänzlich aus PTFE. Ebenso weist der äußere Teilbereich 12a der oberen Auflage 12, der dem äußeren Teilbereich 11a der unteren Auflage 11 im zusammengebauten Zustand der Kaschiervorrichtung 1 entspricht, kein Glasgewebe auf, sondern ist vollständig aus PTFE hergestellt. Alternativ kann der äußere Teilbereich 11a jedoch auch aus einem mit PTFE beschichtetem Glasgewebe bestehen. In der in Fig. 4 gezeigten Ausführungsform der Kaschiervorrichtung 1, weist die Auflage 11 drei Löcher 17 in Breitenrichtung der Kaschiervorrichtung 1 an dem linken Rand und dem rechten Rand (nicht gezeigt) des inneren Teilbereichs 11b auf. Alternativ kann die Auflage 11 aber auch weniger oder mehr als drei Löcher 17 an einem oder beiden Rädern des inneren Teilbereichs 11b aufweisen oder kann anderweitig luftdurchlässig ausgebildet sein. Alternativ zu einer PTFE-Beschichtung können die Auflagen auch mit Silikon beschichtet sein. Eine Silikonbeschichtung weißt einen hohen Dehnungskoeffizienten auf und hat dadurch den Vorteil, dass selbst Werkstücke größerer Dicken und größerer Dickenunterschiede zuverlässig kaschiert werden können. Alternativ zu dem Glasgewebe kann auch ein Karbon- oder Kevlargewebe verwendet werden. Schließlich können, bei niedrigen Temperaturen, auch Polyestergewebe und PU (Polyurethane)-Beschichtungen verwendet werden. Wichtig bei den Beschichtungen ist, dass sie eine gute Antihafteigenschaften, geringe Reibungseigenschaften und eine gute Temperaturbeständigkeit aufweisen.

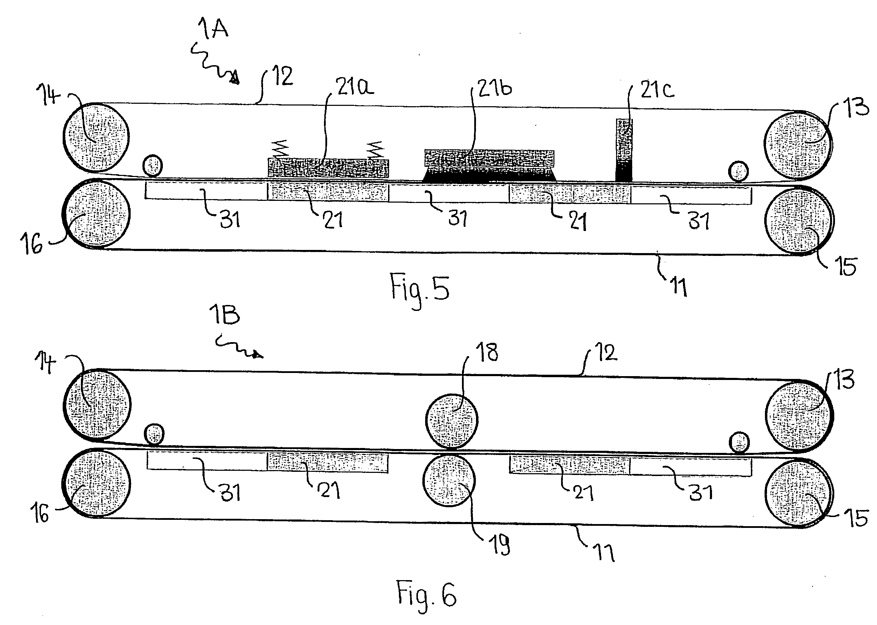

Fig. 5 zeigt eine Kaschiervorrichtung 1A, gemäß einer zweiten Ausführungsform. Die Kaschiervorrichtung 1A unterscheidet sich von der Kaschiervorrichtung 1 gemäß der ersten Ausführungsform in der Ausgestaltung der Temperaturänderungszonen. Entsprechend sind Bauteile der Kaschiervorrichtung 1A, die mit Bauteilen der Kaschiervorrichtung 1 identisch sind, mit den gleichen Bezugszeichen versehen und es wird im Folgenden nicht weiter darauf eingegangen:

Die Kaschiervorrichtung 1A weist drei zusätzliche Übertragungselemente, nämlich ein Kontaktübertragungselement 21 a, ein Strahlungsübertragungselement 21 b und ein Luftübertragungselement 21c auf, die innerhalb der oberen Auflage 12 angeordnet sind. Dabei steht das Kontaktübertragungselement 21 a mit der Auflage 12, genauer mit dem Teil der Auflage 12, der dem Werkstück 40 (nicht gezeigt in Fig. 5) während des Betriebs der Kaschiervorrichtung 1A zugewandt ist, in Verbindung, dass heißt berührt die Auflage 12. Das Kontaktübertragungselement 21 a ist eine Heizung, die mittels Kontakt mit der Auflage 12 Wärme auf das Kaschiergut 72 (nicht gezeigt in Fig. 5) überträgt. Alternativ oder zusätzlich kann das Kontaktübertragungselement auch als Kühlung ausgebildet sein, entsprechend über einer der Kühlelemente 31 angeordnet sein und das Kaschiergut 72 mittels Kontakt mit der oberen Auflage 12 kühlen. Das Strahlungsübertragungselement 21 b steht mit der oberen Auflage 12 nicht unmittelbar in Verbindung, sondern ist etwas zu dem Teil der oberen Auflage 12, der auf das Werkstück 40 gerichtet ist, beabstandet. Das Strahlungsübertragungselement 21b erwärmt das Kaschiergut 72 mittels Strahlungswärme, wie beispielsweise Infrarotstrahlung. Das Luftübertragungselement 21c steht mit der oberen Auflage 12 ebenfalls nicht in Verbindung, sondern ist von dem Teil der oberen Auflage 12, der auf das Werkstück 40 gerichtet ist, beabstandet. Das Luftübertragungselement 21 c ist als Heizung ausgebildet und erwärmt das Kaschiergut 72 mittels Heißluft. Alternativ oder zusätzlich kann das Luftübertragungselement auch als Kühlung ausgebildet sein, über einem der Kühlelemente 31 angeordnet sein und das Kaschiergut 72 mittels Kaltluft kühlen. Das Kontaktübertragungselement 21 a, das Strahlungsübertragungselement 21b und das Luftübertragungselement 21c können je nach Aufgabe, das heißt je nachdem ob das entsprechende Element zur Kühlung oder zur Erwärmung des Kaschierguts 72 dient, an einer einem entsprechenden Heizelement 21 bzw. Kühlelement 31 gegenüberliegenden Position innerhalb der oberen Auflage 12 angeordnet sein. Die in Fig. 5 gezeigte Anordnung der drei Elemente 21a, 21b, 21c kann folglich derart abgewandelt werden, dass beispielsweise das Kontaktübertragungselement 21 a zwischen dem Strahlungsübertragungselement 21b und dem Luftübertragungselement 21c angeordnet ist. Ferner können alternativ auch nur zwei der in Fig. 5 gezeigten Übertragungselemente 21 a, 21 b, 21c oder lediglich eines der Übertragungselemente 21 a, 21 b, 21c in der Kaschiervorrichtung 1 A verwendet werden.

Fig. 6 zeigt eine Kaschiervorrichtung 1B gemäß einer dritten Ausführungsform. Die Kaschiervorrichtung 1B unterscheidet sich von der Kaschiervorrichtung 1 gemäß der ersten Ausführungsform darin, dass sie zwei Kalandrierwalzen 18, 19 aufweist. Entsprechend sind Bauteile der Kaschiervorrichtung 1 B, die mit Bauteilen der Kaschiervorrichtung 1 identisch sind, mit denselben Bezugszeichen versehen und es wird im Folgenden nicht weiter darauf eingegangen.

Wie Fig. 6 zeigt, sind die Kalandrierwalzen 18, 19 in der Mitte der Kaschiervorrichtung 1B in Transportrichtung T angeordnet. Die Kalandrierwalze 18 steht mit der oberen Auflage 12 in Verbindung und die Kalandrierwalze 19 steht mit der unteren Auflage 11 in Verbindung. Entsprechend weist die Kaschiervorrichtung 1B in der Mitte in Transportrichtung T ein Kühlelement 31 weniger verglichen mit der Kaschiervorrichtung 1 auf. Alternativ können mehrere Paare Kalandrierwalzen in der Kaschiervorrichtung 1B vorgesehen sein. Die Kalandrierwalzen 18, 19 können an jeglicher Position entlang der Kaschiervorrichtung 1B in Transportrichtung T angeordnet sein. Während des Betriebs der Kaschiervorrichtung 1 erzeugen die Kalandrierwalzen einen Liniendruck zwischen dem jeweiligen Kaschiergut 71, 72 (nicht gezeigt in Fig. 6) und dem Werkstück 40 (nicht gezeigt in Fig. 6).

Obwohl in den Kaschiervorrichtungen 1, 1A und 1B die Heizelemente 21 und die Kühlelemente 31 innerhalb der unteren Auflage 11 angeordnet sind, können diese alternativ auch innerhalb der oberen Auflage 12 angeordnet sein. In diesem Fall sind die Übertragungselemente 21 a, 21 b, 21c der Kaschiervorrichtung 1 A innerhalb der unteren Auflage 11 anzuordnen.

Während des Betriebs der Kaschiervorrichtung 1, 1A, 1B werden die untere Auflage 11 und die obere Auflage 12 derart über die Umlenkrollen 13, 14 bzw. die Umlenkrollen 15, 16 bewegt, dass ihre einander gegenüberliegenden Teile sich in der Transportrichtung T bewegen. Ein erstes loses Ende des Kaschierguts 71 wird mit der am ersten Ende der Kaschiervorrichtung 1, 1A, 1B liegenden Umlenkrolle 15 der unteren Auflage 11 in Eingriff gebracht. Ebenso wird ein zweites loses Ende des Kaschierguts 72 mit der am ersten Ende der Kaschiervorrichtung 1, 1A, 1B liegenden Umlenkrolle 13 der oberen Auflage 12 in Eingriff gebracht. Dadurch werden das erste Kaschiergut 71 und das zweite Kaschiergut 72 auf der jeweiligen unteren Auflage 11 bzw. oberen Auflage 12 in Transportrichtung T bewegt. Die Heizzonen 20 erwärmen die einander gegenüberliegende Teile der unteren Auflage 11 und der oberen Auflage 12 und damit des ersten Kaschierguts 71 und des zweiten Kaschierguts 72. Die Kühlzonen 30 kühlen die einander gegenüberliegenden Teile der unteren Auflage 11 und der oberen Auflage 12 und damit des ersten Kaschierguts 71 und des zweiten Kaschierguts 72 ab. Zum Kaschieren des Werkstücks 40, dass heißt zum Verkleben des Werkstücks 40 mit dem ersten und zweiten Kaschiergut 71, 72, wird das Werkstück 40 zwischen die untere Auflage 11 mit dem ersten Kaschiergut 71 und die obere Auflage 12 mit dem zweiten Kaschiergut 72 eingeführt. Durch die Bewegung der einander gegenüberliegenden Teile der Auflage 11, 12 und entsprechend der Bewegung des ersten und zweiten Kaschierguts 71, 72 in Transportrichtung T wird auch das Werkstück 40 in Transportrichtung T bewegt.

Während der Bewegung des Werkstücks 40 durch die Kaschiervorrichtung 1 wird dieses durch Druck und Temperatureinwirkung mit dem ersten und dem zweiten Kaschiergut 71, 72 verklebt. Diese Verklebung wird als der Kaschiervorgang bezeichnet. Um dabei eine optimale Abdichtung im Einlauf und Auslauf, dass heißt an dem ersten Ende und dem zweiten Ende der Kaschiervorrichtung 1 in Transportrichtung T zu gewährleisten, drücken die Andruckrollen 81, 82 die Auflage 12 fest an das Kaschiergut 72 bzw. das Werkstück 40.

Während des Kaschiervorgangs wird über die Unterdruckeinrichtung 50, die gemeinsame Unterdruckleitungen 24, die Schlitze 22, 32 und die Löcher 17 Luft zwischen dem Werkstück 40 und dem Kaschiergut 71, 72 herausgesaugt. Insbesondere wird zwischen den beiden Auflagen 11, 12 ein Unterdruck von etwa 0,5 bar erzeugt. Somit wird die obere Auflage 12 in Richtung der unteren Auflage, dass heißt an das Kaschiergut 72 bzw. das Werkstück 40 gedrückt. Durch die angerauten Innenseiten der Auflagen 11, 12 wird die Unterdruckbildung begünstigt. Um ein Einströmen von Luft von außen über die Ränder 11r, 111 bzw. 12r, 121 der unteren Auflage 11 und der oberen Auflage 12 zu vermeiden, sind die äußeren Teilbereiche 11a, 12a der unteren bzw. oberen Auflage 11, 12 glatter als die inneren Teilbereiche 11b, 12b der unteren bzw. oberen Auflage 11, 12 ausgebildet, so dass sie eine optimale Dichtwirkung gegenüber der Umgebung erzielen. Diese Dichtwirkung wird durch die Führungseinrichtung 60 weiter verstärkt.

Das eine oder die mehreren Übertragungselemente 21 a, 21 b, 21 c dienen der Verstärkung der Temperaturwirkung in den Heizzonen 20 bzw. Kühlzonen, je nach Aufgabe. Die Kalandrierwalzen 18, 19 dienen der Verstärkung des Anpressdrucks, insbesondere der Erzeugung eines Linienkontakts zwischen dem Werkstück 40 und dem Kaschiergut 71, 72.

Die oben beschriebenen der Kaschiervorrichtungen 1, 1A, 1B ermöglichen einen hohen Flächendruck wenigstens in einem Teilbereich einer der Temperaturänderungszonen. Dadurch haben Höhenunterschiede im Kaschiergut keinen negativen Einfluss auf die Kaschierung und Lufteinschlüsse, insbesondere bei einem Folienkaschiergut, zwischen Kaschiergut und Werkstück können vermieden werden. Das erste Kaschiergut und das zweite Kaschiergut liegen während des gesamten Kaschiervorgangs eng an dem Werkstück an. So wird ein kontinuierliches und damit zuverlässiges und wirtschaftliches Vakuumkaschieren von Werkstücken beliebiger Länge ermöglicht.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste:

- 1, 1A, 1B: Kaschiervorrichtung
- 10: Transporteinrichtung
- 11, 12: Auflagen
- 11a, 12a: äußerer Teilbereich
- 11b, 12b: innerer Teilbereich
- 111, 11r, 12r, 121: Rand
- 13, 14, 15, 16: Umlenkrollen
- 17: Loch
- 18, 19: Kalandrierwalze
- 20: Heizzone
- 21: Heizelement
- 21a: Kontaktübertragungselement
- 21b: Strahlungsübertragungselement
- 21c: Luftübertragungselement
- 22, 32: Schlitz
- 24: Unterdruckleitung
- 30: Kühlzone
- 31: Kühlelement
- 40: Werkstück
- 50: Unterdruckeinrichtung
- 60: Führungseinrichtung
- 61: erstes Führungselement
- 62: linkes Führungselement
- 71: erstes Kaschiergut
- 72: zweites Kaschiergut
- 81: erste Andruckrolle
- 82: zweite Andruckrolle
- 111, 121: Teflonbeschichtung (PTFE-Beschichtung)
- 112, 122: Glasgewebe
- A: Kaschierzone
- B: Vakuumzone
- C: Abdichtzone
- T: Transportrichtung

## Patentansprüche

1. Kaschiervorrichtung (1, 1A, 1B), mit
einer Transporteinrichtung (10) zum Transportieren wenigstens eines Werkstücks (40) und/oder wenigstens eines Kaschierguts (71, 72),
wenigstens einer Temperaturänderungszone (20, 30) zum Ändern einer Temperatur in dem Kaschiergut (71, 72), und
wenigstens einer Unterdruckeinrichtung (50) zum Erzeugen von Unterdruck, wobei die Transporteinrichtung (10) wenigstens eine Auflage (11, 12) enthält, und
die Temperaturänderungszone (20, 30) wenigstens ein Temperaturänderungselement (21, 31) enthält,
**dadurch gekennzeichnet, dass**
die wenigstens eine Auflage (11, 12) wenigstens einen sich in Transportrichtung (T) erstrekkenden luftdurchlässigen Bereich aufweist,
das wenigstens eine Temperaturänderungselement (21, 31) wenigstens eine Aussparung (22, 32) aufweist, die mit dem luftdurchlässigen Bereich der Auflage (11, 12) fluidmäßig in Verbindung steht, und
die Unterdruckeinrichtung (50) mit der Aussparung (22, 23) des Temperaturänderungselements (21, 31) fluidmäßig derart in Verbindung steht, dass das Kaschiergut (71, 72) während des Transports durch die Temperaturänderungszone (20, 30) zumindest auf einem Teilstreckenabschnitt des Transportwegs an die Auflage (11, 12) angesaugt wird.

2. Kaschiervorrichtung (1, 1A, 1B) nach Anspruch 1, **dadurch gekennzeichnet, dass** der luftdurchlässige Bereich der Auflage (11, 12) Löcher (17) aufweist.

3. Kaschiervorrichtung (1, 1 A, 1B) nach Anspruch 1 oder 2, **dadurch gekennzeichnet, dass** das Temperaturänderungselement (21, 31) eine Unterdruckleitung (24) aufweist, die die Unterdruckeinrichtung (50) fluidmäßig mit der Aussparung (22, 32) des Temperaturänderungselements (21, 31) verbindet.

4. Kaschiervorrichtung (1, 1 A, 1 B) nach einem der vorangehenden Ansprüche, **dadurch gekennzeichnet, dass** das Temperaturänderungselement (21, 31) ein Heizelement (21) oder ein Kühlelement (31) ist.

5. Kaschiervorrichtung (1A) nach einem der vorangehenden Ansprüche, **dadurch gekennzeichnet, dass** die Temperaturänderungszone (20) ferner ein Kontaktübertragungselement (21a) und/oder ein Strahlungsübertragungselement (21 b) und/oder ein Luftübertragungselement (21c) zum Ändern einer Temperatur in dem Kaschiergut (71, 72) aufweist.

6. Kaschiervorrichtung (1A) nach Anspruch 5, **dadurch gekennzeichnet, dass** das Strahlungsübertragungselement (21b) ein Infrarotstrahlungselement ist.

7. Kaschiervorrichtung (1, 1 A, 1 B) nach einem der vorangehenden Ansprüche, **dadurch gekennzeichnet, dass** die Transporteinrichtung (10) wenigstens zwei Umlenkrollen (13, 14, 15, 16) zum Antreiben bzw. Führen der Auflage (11, 12) aufweist.

8. Kaschiervorrichtung (1B) nach einem der vorangehenden Ansprüche, **dadurch gekennzeichnet, dass** die Transporteinrichtung (10) wenigstens eine Kalandrierwalze (18, 19) zum Pressen der Auflage (11, 12) an das Kaschiergut (71, 72) aufweist.

9. Kaschiervorrichtung (1, 1A, 1B) nach einem der vorangehenden Ansprüche, ferner mit wenigstens einer Führungseinrichtung (60) zum Führen wenigstens eines in Transportrichtung (T) angeordneten Rands (11r, 12r, 111, 121) der Auflage (11, 12).

10. Kaschiervorrichtung (1, 1 A, 1 B) nach einem der vorangehenden Ansprüche, **dadurch gekennzeichnet, dass** die Auflage (11, 12) ein mit PTFE versehenes Glasgewebe ist.

11. Kaschiervorrichtung (1, 1A, 1 B) nach Anspruch 2, **dadurch gekennzeichnet, dass** die Löcher (17) quer zur Transportrichtung (T) mit einem Abstand zu dem Rand (11r, 12r, 111, 121) der Auflage (11, 12) angeordnet sind.

12. Kaschiervorrichtung (1, 1 A, 1B) nach Anspruch 11, **dadurch gekennzeichnet, dass** ein äußerer Teilbereich (11a, 12a) der Auflage (11, 12), der zwischen den Löchern (17) und dem Rand (11r, 12r, 111, 121) der Auflage (11, 12) angeordnet ist, eine glattere Oberflächenstruktur aufweist verglichen mit einem inneren Teilbereich (11b, 12b) der Auflage (11, 12), in den die Löcher (17) eingebracht sind und der sich zwischen den Löchern (17) erstreckt.

13. Kaschiervorrichtung (1, 1A, 1B) nach einem der vorangehenden Ansprüche, ferner mit wenigstens einer ersten Andruckrolle (81) und einer zweiten Andruckrolle (82), wobei die erste Andruckrolle (81) an einem ersten Ende und die zweite Andruckrolle (82) an einem zweiten Ende der Kaschiervorrichtung (1) in Transportrichtung T vorgesehen ist.

14. Kaschiervorrichtung (1, 1A, 1B) nach einem der vorangehenden Ansprüche, wenigstens mit zwei Temperaturänderungselementen (21, 31), wobei die aneinander grenzenden Seiten der Temperaturänderungselemente (21, 31) abgedichtet sind.

15. Kaschiervorrichtung (1, 1 A, 1 B) nach einem der vorangehenden Ansprüche, **dadurch gekennzeichnet, dass** die Transporteinrichtung (10) zwei Auflagen (11, 12) aufweist, die derart angeordnet sind, dass sie während des Transports zwei gegenüber liegenden Seiten des Werkstück (40) zugeordnet sind, wobei die eine Auflage (11) zwei luftdurchlässige Ränder aufweist und die andere Auflage (12) zwei luftundurchlässige Ränder aufweist.

## Claims

1. A laminating apparatus (1, 1A, 1B), comprising
a transportation device (10) for transporting at least one workpiece (40) and/or at least one laminating item (71, 72);
at least one temperature altering zone (20, 30) for altering a temperature within the laminating item (71, 72); and
at least one vacuum device (50) for generating a vacuum, wherein
the transport device (10) includes at least one layer (11, 12), and
the temperature altering zone (20, 30) includes at least one temperature altering element (21,31),
**characterized in that**
the at least one layer (11, 12) includes an air-permeable portion extending in a transportation direction (T),
the at least one temperature altering element (21, 31) includes at least one recess (22, 32) being in fluid communication with the air-permeable portion of the layer (11, 12), and
the vacuum device (50) is in fluid communication with the recess (22, 23) of the temperature altering element (21, 31), such that the laminating item (71, 72) is sucked onto the layer (11, 12) during transportation through the temperature altering zone (20, 30) at least on a subsection of the transportation path.

2. The laminating apparatus (1, 1A, 1B) of claim 1, **characterized in that** the air-permeable portion of the layer (11, 12) includes holes (17).

3. The laminating apparatus (1, 1A, 1B) of claim 1 or 2, **characterized in that** the temperature altering element (21, 31) includes a vacuum conduit fluidly connecting the vacuum device (50) to the recess (22, 32) of the temperature altering element (21, 31).

4. The laminating apparatus (1, 1A, 1B) of anyone of the preceding claims, **characterized in that** the temperature altering element (21, 31) is a heating element (21) or a cooling element (31).

5. The laminating apparatus (1A) of anyone of the preceding claims, **characterized in that** the temperature altering zone (20) further includes a contact transmission element (21a) and/or a radiation transmission element (21b) and/or an air transmission element (21c) for altering a temperature within the laminating item (71, 72).

6. The laminating apparatus (1A) of claim 5, **characterized in that** the radiation transmission element (21b) is an infrared radiation element.

7. The laminating apparatus (1, 1A, 1B) of anyone of the preceding claims, **characterized in that** the transportation device (10) includes at least one guide roller (13, 14, 15, 16) for driving and guiding the layer (11, 12), respectively.

8. The laminating apparatus (1B) of anyone of the preceding claims, **characterized in that** the transportation device (10) includes a calendering drum (18, 19) for pressing the layer (11, 12) onto the laminating item (71, 72).

9. The laminating apparatus (1, 1A, 1B) of anyone of the preceding claims, further comprising at least one guiding device (60) for guiding a rim (11r, 12r, 111, 121) of the layer (11, 12) that is disposed in transport direction.

10. The laminating apparatus (1, 1A, 1B) of anyone of the preceding claims, **characterized in that** the layer (11, 12) is a glass fabric provided with PTFE.

11. The laminating apparatus (1, 1A, 1B) of claim 2, **characterized in that** the holes (17) are disposed laterally with respect to the transportation direction (T) under a distance to the rim (11r, 12r, 111, 121) of the layer (11, 12).

12. The laminating apparatus (1, 1A, 1B) of claim 11, **characterized in that** an outer portion (11a, 12a) of the layer (11, 12) that is disposed between the holes (17) and the rim (11r, 12r, 111, 121) of the layer (11, 12) includes a smoother surface texture compared to an inner section (11b, 12b) of the layer (11, 12) in which the holes (17) are formed and which extends between the holes (17).

13. The laminating apparatus (1, 1A, 1B) of anyone of the preceding claims, further comprising at least one first contact pressure roller (81) and one second contact pressure roller (82), wherein the first contact pressure roller (81) is provided at a first end and the second contact pressure roller (82) is provided at a second end of the laminating device (1) in transportation direction (T).

14. The laminating apparatus (1, 1A, 1B) of anyone of the preceding claims, further comprising at least two temperature altering elements (21, 31), wherein adjacent sides of the temperature altering elements (21, 31) are sealed.

15. The laminating apparatus (1, 1A, 1B) of anyone of the preceding claims, **characterized in that** the transportation device (10) includes two layers (11, 12) being disposed such that, during transportation, they are associated with two opposing sides of the workpiece (40), wherein one layer (11) includes two air-permeable rims and the other layer (12) includes two airtight rims.

## Revendications

1. Dispositif de stratification (1, 1A, 1 B), comportant
un équipement de transport (10) destiné à transporter au moins une pièce à usiner (40) et/ou au moins un produit à stratifier (71, 72),
au moins une zone de changement de température (20, 30) destinée à changer une température dans le produit à stratifier (71, 72), et
au moins un équipement de dépression (50) destiné à générer une dépression,
l'équipement de transport (10) contenant au moins un appui (11, 12), et
la zone de changement de température (20, 30) contenant au moins un élément de changement de température (21, 31),
**caractérisé en ce que**
l'au moins un appui (11, 12) présente au moins une zone perméable à l'air s'étendant dans le sens de transport (T),
l'au moins un élément de changement de température (21, 31) présente au moins un évidement (22, 32), qui est en relation fluidique avec la zone perméable à l'air de l'appui (11, 12), et
l'équipement de dépression (50) est en relation fluidique avec l'évidement (22, 23) de l'élément de changement de température (21, 31) de telle sorte que le produit à stratifier (71, 72) est aspiré contre l'appui (11, 12) au moins sur une partie de tronçon du parcours de transport pendant le transport à travers la zone de changement de température (20, 30).

2. Dispositif de stratification (1, 1A, 1B) selon la revendication 1, **caractérisé en ce que** la zone perméable à l'air de l'appui (11, 12) présente des trous (17).

3. Dispositif de stratification (1, 1A, 1 B) selon la revendication 1 ou 2, **caractérisé en ce que** l'élément de changement de température (21, 31) présente une conduite de dépression (24), qui relie de manière fluidique l'équipement de dépression (50) à l'évidement (22, 32) de l'élément de changement de température (21, 31).

4. Dispositif de stratification (1, 1A, 1B) selon l'une quelconque des revendications précédentes, **caractérisé en ce que** l'élément de changement de température (21, 31) est un élément de chauffage (21) ou un élément de refroidissement (31).

5. Dispositif de stratification (1A) selon l'une quelconque des revendications précédentes, **caractérisé en ce que** la zone de changement de température (20) présente en outre un élément de transmission de contact (21 a) et/ou un élément de transmission de rayonnement (21 b) et/ou un élément de transmission d'air (21 c) pour changer une température dans le produit à stratifier (71, 72).

6. Dispositif de stratification (1A) selon la revendication 5, **caractérisé en ce que** l'élément de transmission de rayonnement (21 b) est un élément à rayonnement infrarouge.

7. Dispositif de stratification (1, 1A, 1B) selon l'une quelconque des revendications précédentes, **caractérisé en ce que** l'équipement de transport (10) présente au moins deux galets de renvoi (13, 14, 15, 16) destinés à entraîner et/ou à guider l'appui (11, 12).

8. Dispositif de stratification (1 B) selon l'une quelconque des revendications précédentes, **caractérisé en ce que** l'équipement de transport (10) présente au moins un rouleau de calandrage (18, 19) destiné à presser l'appui (11, 12) contre le produit à stratifier (71, 72).

9. Dispositif de stratification (1, 1A, 1B) selon l'une quelconque des revendications précédentes, comprenant en outre au moins un équipement de guidage (60) destiné à guider au moins un bord (11r, 12r, 111, 121) de l'appui (11, 12) disposé dans le sens de transport (T).

10. Dispositif de stratification (1, 1A, 1 B) selon l'une quelconque des revendications précédentes, **caractérisé en ce que** l'appui (11, 12) est un tissu de verre enduit de PTFE.

11. Dispositif de stratification (1, 1A, 1 B) selon la revendication 2, **caractérisé en ce que** les trous (17) sont disposés transversalement au sens de transport (T) à une distance du bord (11 r, 12r, 11l, 121) de l'appui (11, 12).

12. Dispositif de stratification (1, 1A, 1 B) selon la revendication 11, **caractérisé en ce qu'**une partie de zone extérieure (11a, 12a) de l'appui (11, 12), qui est disposée entre les trous (17) et le bord (11 r, 12r, 11l, 12l) de l'appui (11, 12) présente une structure de surface plus lisse qu'une partie de zone intérieure (11b, 12b) de l'appui (11, 12), dans laquelle les trous (17) sont réalisés et qui s'étend entre les trous (17).

13. Dispositif de stratification (1, 1A, 1B) selon l'une quelconque des revendications précédentes, comprenant en outre au moins un premier galet de pression (81) et un deuxième galet de pression (82), le premier galet de pression (81) étant prévu à une première extrémité et le deuxième galet de pression (82) étant prévu à une deuxième extrémité du dispositif de stratification (1) dans le sens de transport T.

14. Dispositif de stratification (1, 1A, 1B) selon l'une quelconque des revendications précédentes, comprenant au moins deux éléments de changement de température (21, 31), les côtés adjacents des éléments de changement de température (21, 31) étant étanchéifiés.

15. Dispositif de stratification (1, 1A, 1B) selon l'une quelconque des revendications précédentes, **caractérisé en ce que** l'équipement de transport (10) présente deux appuis (11, 12) qui sont disposés de telle sorte qu'ils sont affectés pendant le transport à deux côtés opposés de la pièce à usiner (40), un appui (11) présentant deux bords perméables à l'air et l'autre support (12) présentant deux bords imperméables à l'air.
